(19) **Europäisches Patentamt European Patent Office Office européen des brevets**

(11) **EP 3 331 125 B1**

(12) **FASCICULE DE BREVET EUROPEEN**

(45) Date de publication et mention de la délivrance du brevet:
**11.09.2019 Bulletin 2019/37**

(51) Int Cl.:
**H02J 7/00** *(2006.01)*

(21) Numéro de dépôt: **17203952.1**

(22) Date de dépôt: **28.11.2017**

(54) **PROCÉDÉ D'ÉQUILIBRAGE D'ETATS DE CHARGE D'UNE PLURALITÉ DE DISPOSITIFS DE STOCKAGE D'ÉNERGIE ÉLECTRIQUE**

VERFAHREN ZUM AUSGLEICH DER LADUNGSZUSTÄNDE EINER VIELZAHL VON SPEICHERVORRICHTUNGEN FÜR ELEKTRISCHE ENERGIE

METHOD FOR BALANCING LOAD STATES OF A PLURALITY OF DEVICES FOR STORING ELECTRIC ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2016 FR 1661779**

(43) Date de publication de la demande:
**06.06.2018 Bulletin 2018/23**

(73) Titulaire: **Commissariat à l'Energie Atomique et aux Energies Alternatives 75015 Paris (FR)**

(72) Inventeurs:
• **GAOUA, Yacine 73000 CHAMBERY (FR)**
• **AL SHAKARCHI, Franck 73160 SAINT-SULPICE (FR)**
• **DELAPLAGNE, Tony 73190 CHALLES LES EAUX (FR)**

(74) Mandataire: **Cabinet Camus Lebkiri 25 rue de Maubeuge 75009 Paris (FR)**

(56) Documents cités:
EP-A1- 2 675 001          EP-A1- 2 939 864
DE-A1-102015 002 072      US-A1- 2012 319 657

**Description**

**DOMAINE TECHNIQUE DE L'INVENTION**

La présente invention concerne un procédé d'équilibrage d'état de charge d'une pluralité de dispositifs de stockage d'énergie électrique appartenant à un système de stockage d'énergie électrique.

**ARRIÈRE-PLAN TECHNOLOGIQUE DE L'INVENTION**

Les dispositifs de production d'énergie électrique basés sur les énergies renouvelables produisent une quantité d'énergie qui dépend directement de leur environnement. Dans le cas par exemple d'une centrale éolienne, plus il y a de vent, plus la centrale produit d'énergie électrique, alors qu'en l'absence de vent, la centrale ne produit pas d'énergie.
Un tel dispositif ne peut pas adapter sa production à la demande en énergie d'un réseau électrique auquel il est connecté. Par conséquent, ce dispositif de production nécessite un système de stockage permettant d'emmagasiner l'énergie produite qui n'est pas immédiatement consommée et de la restituer ultérieurement afin de répondre à des sollicitations du réseau électrique.
De manière classique, un système de stockage d'énergie comporte plusieurs batteries connectées en parallèle et/ou en série. Initialement, les batteries présentent un même état de charge. Au cours du temps, les états de charge des batteries dérivent les uns par rapport aux autres, par exemple à cause de sollicitations qui sont différentes d'une batterie à l'autre suite à l'application d'une gestion d'énergie basique, ou parce que les batteries ne vieillissent pas de façon homogène. Le système de stockage est alors limité soit par la batterie qui a l'état de charge le plus élevé lorsque le système est en charge, soit par la batterie qui a l'état de charge le plus faible lorsque le système est en décharge. Les capacités du système de stockage sont tirées vers le bas.
La disparité des états de charge accentue davantage l'inhomogénéité du vieillissement des batteries, ce qui se répercute sur les états de charges, et ainsi de suite. Par ailleurs, la limitation du système de stockage conduit à une perte d'un réservoir énergétique non négligeable. Pour tenter de pallier ces problèmes, le système de stockage est généralement surdimensionné, ce qui augmente inutilement le coût du système.
Actuellement, il existe des algorithmes de gestion de tels systèmes qui assurent la mise en sécurité des batteries par exemple en déconnectant une batterie endommagée ou dont la température est trop élevée. Cependant ces algorithmes de gestion ne permettent pas d'assurer un équilibrage des états de charge entre les différentes batteries que comporte le système de stockage.
Il apparaît donc un besoin d'améliorer la gestion d'énergie du système de stockage pour permettre d'homogénéiser dans le temps les états de charge des batteries.
On identifie ici les demandes de brevet DE 10 2015 002072 A1 et EP 2 939 864 A1.

**RÉSUMÉ DE L'INVENTION**

La présente invention vise à équilibrer des états de charge entre plusieurs dispositifs de stockage d'énergie appartenant à un même système de stockage d'énergie.
Selon un premier aspect de l'invention, ce but est atteint en prévoyant un procédé d'équilibrage d'états de charge d'une pluralité de dispositifs de stockage d'énergie électrique formant un système de stockage d'énergie, les dispositifs de stockage étant connectés à un bus de distribution par l'intermédiaire d'éléments de connexion, le système de stockage présentant un courant de fonctionnement traversant le bus de distribution. Le courant de fonctionnement appartient à une plage de courant s'étendant entre un courant de charge maximal, de signe négatif, et un courant de décharge maximal, de signe positif. Cette plage de courant est divisée en au moins deux intervalles de courant : un premier intervalle s'étendant, en valeurs absolues, entre le courant de charge maximal et un courant nul (phase de charge), et un deuxième intervalle s'étendant entre un courant nul et le courant de décharge maximal (phase de décharge). Chaque élément de connexion présente au moins deux états de conduction électrique. Le procédé d'équilibrage comporte les étapes suivantes :

- (a) obtenir l'état de charge des dispositifs de stockage par des moyens de mesures de l'état de charge ;
- (b) calculer, à partir des états de charge obtenus au cours de l'étape (a), une cartographie des états de conduction des éléments de connexion associée à chaque intervalle de courant ;
- (c) déterminer l'intervalle de courant auquel appartient le courant de fonctionnement du système de stockage ;
- (d) appliquer aux éléments de connexion la cartographie associée à l'intervalle de courant déterminé au cours de l'étape (c) ;

les étapes (a) et (b) étant répétées périodiquement pour mettre à jour les cartographies des états de conduction des éléments de connexion.

On entend par « cartographie des états de conduction » une représentation indiquant dans quel état de conduction placer chaque élément de connexion. Par conséquent, lorsque la cartographie est appliquée aux éléments de connexion, chacun d'entre eux se place dans l'état de conduction qui lui est attribué dans la cartographie, en fonction d'un courant de sollicitation auquel est soumis le système de stockage d'énergie.

Le procédé de fabrication selon l'invention peut également comporter une ou plusieurs caractéristiques parmi les suivantes, considérées individuellement ou selon les combinaisons techniquement possibles :

- l'étape (b) de calcul des cartographies comporte les opérations suivantes :

  ◦ construire un problème d'optimisation défini par des variables de décision, des contraintes, et une fonction objectif visant à minimiser l'écart entre les états de charge des dispositifs de stockage ;
  ◦ résoudre le problème d'optimisation ;

- les dispositifs de stockage sont connectés en parallèle au bus de distribution par l'intermédiaire de contacteurs, le problème d'optimisation étant non-linéaire ;
- le problème d'optimisation est linéarisé afin de garantir l'obtention d'une solution optimale avec un temps de calcul réduit ;
- les dispositifs de stockage sont connectés en parallèle au bus de distribution par l'intermédiaire de résistances variables, le problème d'optimisation étant non-linéaire ; dans ce cas, le problème d'optimisation ne peut pas être linéarisé et la cartographie sera alors sous optimale ;
- le procédé comporte une étape préalable de caractérisation d'au moins un dispositif de stockage pour déterminer, en fonction de l'état de charge du dispositif de stockage, les variations de chacun des paramètres caractéristiques du dispositif de stockage suivants : la tension de circuit ouvert, la résistance interne, le courant de charge maximal et le courant de décharge maximum ;
- le premier intervalle de courant et/ou le deuxième intervalle de courant sont subdivisés en un nombre prédéterminé d'intervalles de courant ;
- le nombre prédéterminé d'intervalles de courant est paramétré par un utilisateur.

Un deuxième aspect de l'invention concerne un produit programme d'ordinateur comprenant des instructions pour la mise en oeuvre d'un procédé selon le premier aspect de l'invention, lorsque ces instructions sont exécutées par un processeur.

## BRÈVE DESCRIPTION DES FIGURES

L'invention et ses différentes applications seront mieux comprises à la lecture de la description qui suit et à l'examen des figures qui l'accompagnent, parmi lesquelles :

- la figure 1 représente schématiquement un premier exemple de contexte de mise en oeuvre du procédé selon l'invention ;
- la figure 2 représente un diagramme fonctionnel d'un mode de mise oeuvre du procédé selon l'invention ;
- les figures 3A, 3B et 3C représentent pour les modes de charge et de décharge, en fonction de l'état de charge de la batterie, les variations respectivement de la tension de circuit ouvert, de la résistance interne, et du courant de fonctionnement maximal ;
- les figures 4A et 4B représentent respectivement un exemple de profil de sollicitation en courant appliqué au système de stockage de la figure 1 et à un système de stockage de l'art antérieur, et les états de charges initiaux de leurs batteries;
- la figure 5 représente les variations au cours du temps des états de charge minimaux et maximaux du système de stockage de la figure 1 et du système de stockage de l'art antérieur lorsque le profil de la figure 4A est appliqué ;
- la figure 6A représente les variations au cours du temps des courants minimaux et maximaux fournis ou absorbés par les batteries du système de stockage de la figure 1 et du système de stockage de l'art antérieur lorsque le profil de la figure 4A est appliqué ;
- la figure 6B représente les variations au cours du temps de la différence entre les courants minimaux et maximaux de la figure 6A, pour le système de stockage de la figure 1 et pour le système de stockage de l'art antérieur ;
- les figures 7A et 7B représentent les variations au cours du temps du nombre de batteries connectées respectivement dans le système de stockage de la figure 1 et dans le système de stockage de l'art antérieur lorsque le profil de la figure 4A est appliqué ;

-  la figure 8 représente schématiquement un deuxième exemple de contexte de mise en oeuvre du procédé selon l'invention.

Les figures ne sont présentées qu'à titre indicatif et nullement limitatif de l'invention.

Pour plus de clarté, les éléments identiques ou similaires sont repérés par des signes de référence identiques sur toutes les figures.

## DESCRIPTION DÉTAILLÉE DE MODES DE MISE EN ŒUVRE DE L'INVENTION

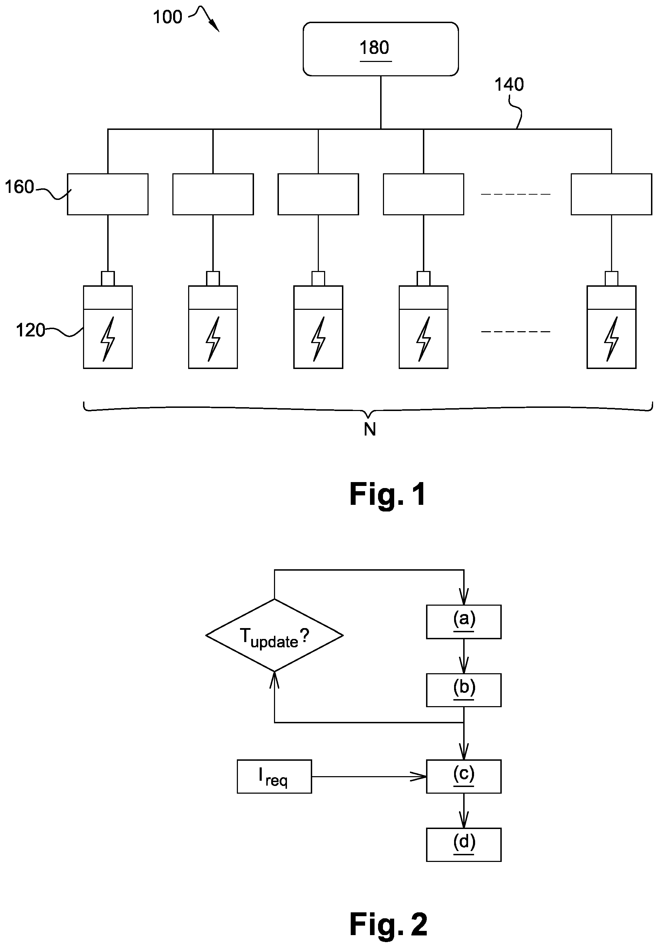

La figure 1 représente schématiquement un premier exemple de contexte de mise en oeuvre du procédé selon l'invention. La figure 1 montre un système de stockage d'énergie électrique 100 comportant N dispositifs de stockage d'énergie 120 montés en parallèle. Chaque dispositif de stockage 120 est connecté électriquement à un bus de distribution 140 par l'intermédiaire d'un élément de connexion 160. Le bus de distribution 140 est connecté électriquement à un réseau électrique (non représenté).

Le réseau électrique comporte un ou plusieurs dispositifs de production d'énergie électrique permettant de fournir de l'énergie au système de stockage 100, tels que des centrales photovoltaïques ou éoliennes, ou des générateurs diesel. Le réseau électrique comporte également un ou plusieurs consommateurs d'énergie électrique.

Le système de stockage 100 présente deux modes de fonctionnement : un mode de charge et un mode de décharge. Dans le mode de charge, le système de stockage 100 emmagasine l'énergie électrique fournie par le réseau électrique. Inversement, dans le mode de décharge, le système de stockage 100 restitue au réseau électrique l'énergie emmagasinée pour alimenter les consommateurs en énergie électrique.

Le système de stockage 100 présente une tension de fonctionnement prise sur le bus de distribution 140, et un courant de fonctionnement traversant le bus de distribution 140. Le courant de fonctionnement est un courant de charge lorsque le système de stockage 100 est dans le mode de charge. Inversement, le courant de fonctionnement est un courant de décharge lorsque le système de stockage 100 est dans le mode de décharge. Par convention, le courant de charge est de signe négatif et le courant de décharge est de signe positif.

La connexion entre le bus de distribution 140 et le réseau électrique est effectuée par l'intermédiaire d'un convertisseur tension alternative - tension continue 180 qui a pour fonction d'adapter la forme et l'amplitude de la tension de fonctionnement.

Le procédé selon l'invention peut s'appliquer à tous les types de dispositifs de stockage d'énergie tels que des batteries électrochimiques ou des piles à combustible. Dans le système de stockage 100 de la figure 1, les dispositifs de stockage 120 sont des batteries électrochimiques identiques, et les éléments de connexions 160 sont des contacteurs 160.

Le contacteur 160 peut être placé dans deux états de conduction électrique : un état dit « ON » lorsque le contacteur 160 est fermé et un état dit « OFF » lorsque le contacteur 160 est ouvert. Lorsque le contacteur est à l'état ON, le contacteur 160 conduit l'électricité, et lorsque le contacteur est à l'état OFF, le contacteur 160 ne conduit pas l'électricité.

La présente invention a pour objectif de piloter les contacteurs 160 de manière à ce que le système de stockage 100 réponde aux sollicitations du réseau électrique tout en faisant en sorte que les batteries 120 conservent toutes un état de charge sensiblement identique au cours du temps. Les contacteurs 160 sont pilotés en utilisant une cartographie qui indique dans quel état de conduction (ON ou OFF) chaque contacteur 160 doit être placé en fonction du courant de sollicitation.

Le courant de fonctionnement du système de stockage 100 appartient à une plage de courant qui s'étend entre le courant de charge maximal $I_{chmax}$ (de signe négatif) et le courant de décharge maximal $I_{dismax}$ (de signe positif) du système de stockage 100. Le courant de fonctionnement est borné par ces courants $I_{chmax}$ et $I_{dismax}$ qui sont des paramètres intrinsèques du système de stockage 100.

La plage de courant est divisée en au moins deux intervalles de courant, un premier intervalle s'étendant entre le courant de charge maximal $I_{chmax}$ et un courant nul, et un deuxième intervalle s'étendant entre le courant nul et le courant de décharge maximal $I_{dismax}$. Ainsi, les modes de charge et de décharges sont dissociés pour permettre le calcul de la cartographie des états de conductions des contacteurs 160 pour chaque intervalle de courant, comme décrit plus en détail par la suite. Une première cartographie est calculée pour le premier intervalle correspondant au mode de charge, et une deuxième cartographie est calculée pour le deuxième intervalle correspondant au mode de décharge.

Avantageusement, le premier intervalle de courant et le deuxième intervalle de courant peuvent être également divisés. Les intervalles de courant ainsi formés ont une taille plus réduite ce qui permet d'obtenir une cartographie plus adaptée pour chaque intervalle. Plus le nombre d'intervalles de courant est élevé, plus l'équilibrage des états de charge des batteries 120 est efficace et converge rapidement. Le nombre et les bornes des intervalles de courant sont par exemple paramétrés par un utilisateur.

La figure 2 représente un diagramme fonctionnel d'un mode de mise en oeuvre du procédé selon l'invention.

Au cours d'une étape (a), l'état de charge de chaque batterie 120 est obtenu par des moyens de mesures associés à chaque batterie 120. Ensuite, à partir de ces états de charges, la cartographie des états de conduction des contacteurs 160 associée à chaque intervalle de courant est calculée.

Pour le système de stockage 100 de la figure 1, le calcul de la cartographie est un problème d'optimisation de type combinatoire, non-linéaire et non-convexe, également appelé MINLP pour « Mixed Integer Non-Linear Programming en anglais.

De manière générale, un problème d'optimisation se définit par un ensemble de variables de décision prenant chacune leur valeur parmi un ensemble appelé domaine, et par un ensemble de relations logiques, appelées contraintes, qui restreignent les combinaisons de valeurs permises. Un tel problème se définit également par une fonction objectif qui caractérise la qualité d'une solution. Une solution à un tel problème est une affectation d'une valeur de son domaine à chaque variable de décision qui satisfait toutes les contraintes. L'ensemble des solutions optimales, dans le cas d'un problème de minimisation, correspond aux solutions ayant la plus petite valeur de la fonction objectif parmi l'ensemble des solutions existantes.

Dans le contexte de l'invention, la fonction objectif consiste à équilibrer les états de charge SOC des N batteries 120 du système de stockage 100, ce qui revient à minimiser la différence entre les états de charge des batteries 120 prises deux à deux. Cette différence peut se traduire mathématiquement par la matrice suivante :

$$\begin{pmatrix} SOC_1 - SOC_1 & SOC_1 - SOC_2 & \cdots & SOC_1 - SOC_{N-1} & SOC_1 - SOC_N \\ SOC_2 - SOC_1 & SOC_2 - SOC_2 & \cdots & SOC_2 - SOC_{N-1} & SOC_2 - SOC_N \\ SOC_3 - SOC_1 & SOC_3 - SOC_2 & \cdots & SOC_3 - SOC_{N-1} & SOC_3 - SOC_N \\ & \vdots & \ddots & \vdots & \\ SOC_N - SOC_1 & SOC_N - SOC_2 & \cdots & SOC_N - SOC_{N-1} & SOC_N - SOC_N \end{pmatrix}$$

Cette matrice est symétrique, par conséquent seule la partie triangulaire supérieure ou inférieure de la matrice est conservée, en éliminant également la diagonale de la matrice, afin de supprimer les redondances. La fonction objectif peut donc s'écrire sous les deux formes équivalentes suivantes, qui sont respectivement une fonction quadratique et une fonction valeur absolue :

$$\text{Min}(\sum_{i \in N} \sum_{j < i, j \in N} (SOC_i - SOC_j)^2 \equiv \text{Min}(\sum_{i \in N} \sum_{j < i, j \in N} \text{abs}(SOC_i - SOC_j)$$

De préférence, on utilise la fonction valeur absolue car elle permet des temps de calcul plus rapides.

Pour le système de stockage 100 de la figure 1, les variables de décision du problème d'optimisation sont les suivantes :

- l'état de conduction $X_i$ des contacteurs 160, $i \in \{1, ..., N\}$, N étant le nombre de batterie 120 : $X_i$ vaut 1 si le contacteur est fermé, et 0 si le contacteur est ouvert ($X_i \in \{0,1\}$) ;
- la tension $U_i$ aux bornes de la batterie i, $i \in \{1, ..., N\}$ : $U_i$ est supérieure ou égale à 0 ($U_i \geq 0$) ;
- le courant $I_i$ de la batterie i, $i \in \{1, ..., N\}$ : $I_i$ est supérieure ou égale à 0 à la fois pour le mode charge et pour le mode décharge car le signe négatif du mode de charge est intégré directement dans les contraintes en séparant le mode de charge et de décharge ($I_i \geq 0$) ;
- l'état de charge $SOC_i$ de la batterie i, $i \in \{1, ..., N\}$ : $SOC_i$ est supérieure ou égale à 0 ($SOC_i \geq 0$) ;
- la tension de fonctionnement $U_{pack}$ du système de stockage 100 : $U_{pack}$ est supérieure ou égale à 0 ($U_{pack} \geq 0$).

Les contraintes du problème d'optimisation, qui représentent le fonctionnement du système de stockage 100 de la figure 1, sont par exemples définies par les relations suivantes :

$$U_{min} \leq U_i \leq U_{max} \qquad (C.1)$$

où $U_{min}$ et $U_{max}$ sont respectivement les tensions minimal et maximal préconisées pour les batteries ;

$$SOC_i = SOCinit_i \pm \Delta t * \frac{I_i}{Cnom} \qquad (C.2)$$

où $SOCinit_i$ est l'état de charge de la batterie i, $i \in \{1, ..., N\}$, obtenu au cours de l'étape (a), cette contrainte correspondant à l'évolution de l'état de charge de chaque batterie en fonction du courant de fonctionnement pour le mode de charge (signe +) et pour le mode de décharge (signe -) ;

$$U_i = OCV_i \pm Rs_i * I_i \qquad (C.3)$$

où $OCV_i$ et $Rs_i$ sont respectivement la tension de circuit ouvert et la résistance interne de la batterie i, $i \in \{1, ..., N\}$, cette contrainte correspondant au calcul de la tension de fonctionnement de chaque batterie pour le mode de charge (signe +) et pour le mode de décharge (signe -) ;

$$0 \leq I_i \leq IchMax_i * X_i \qquad (C.4)$$

cette contrainte correspondant, pour le mode de charge, à la limitation du courant de charge $I_i$ de la batterie i, $i \in \{1, ..., N\}$, ce courant devant rester compris entre 0 et le courant de charge maximal $IchMax_i$ préconisé si le contacteur 160 est fermé ($X_i = 1$), et être égal à 0 si le contacteur 160 est ouvert ($X_i = 0$) ;

$$0 \leq I_i \leq IdisMax_i * X_i \qquad (C.5)$$

cette contrainte correspondant, pour le mode de décharge, à la limitation du courant de décharge $I_i$ de la batterie i, $i \in \{1, ..., N\}$, ce courant devant rester compris entre 0 et le courant de décharge maximal $IdisMax_i$ préconisé si le contacteur 160 est fermé ($X_i = 1$), et être égal à 0 si le contacteur 160 est ouvert ($X_i = 0$), préconisé pour la batterie i, $i \in \{1, ..., N\}$ ;

$$SOC_{min} \leq SOC_i \leq SOC_{max} \qquad (C.6)$$

où $SOC_{min}$ et $SOC_{max}$ sont respectivement les états de charge minimal et maximal préconisées pour les batteries ;

$$-Delta_v \leq X_i * (U_i - U_{pack}) \leq Delta_v \qquad (C.7)$$

cette contrainte signifiant que la tension des batteries connectées au bus de distribution ($X_i = 1$) doit être la même avec une erreur de $Delta_v$, qui peut être paramétrée par l'utilisateur ;

$$\sum_{i \in N} I_i = abs(I_{req}) \qquad (C.8)$$

cette contrainte signifiant que les batteries connectées au bus de distribution doivent satisfaire la demande en courant, c'est-à-dire que la somme de leurs doit être égale au courant de fonctionnement recquis $I_{req}$ ;

$$\sum_{i \in N} X_i = Min\_On\_Battery \qquad (C.9)$$

cette contrainte signifiant que le nombre de batteries connectées au bus de distribution doit toujours être supérieur ou égal à un nombre minimum Min_On_Battery qui dépend par exemple des exigences du gestionnaire du réseau électrique, ou de la technologie des batteries 120 ou qui peut être paramétré par l'utilisateur ;

$$I_i \geq X_i * eps \qquad (C.10)$$

cette contrainte signifiant que si la batterie i,i ∈ {1, ..., N}, est connectée, elle doit délivrer ou absorber un courant minimal eps, par exemple fixé à 0.0001 A, afin d'éviter la symétrie de la solution qui se traduit en pratique par un contacteur fermé et un courant délivré ou absorbé égal à 0.

Le problème d'optimisation ainsi construit est non-linéaire car la contrainte (C.7) et la fonction objectif sont non-linéaires. Un tel problème est difficile à résoudre et il n'est pas certain d'obtenir une solution optimale. Avantageusement, un problème linéaire est construit à partir du problème non-linéaire afin de simplifier la résolution et d'assurer que la solution trouvée soit optimale, sans perte de performance.

Pour effectuer cette linéarisation, des variables de décisions supplémentaires sont introduites :

- une variable de linéarisation $L_i$ du produit des variables $U_i$ et $X_i$, $L_i$ étant supérieure ou égale à 0 ($L_i \geq 0$) ;
- une variable de linéarisation $H_i$ du produit des variables $U_{pack}$ et $X_i$, $H_i$ étant supérieure ou égale à 0 ($H_i \geq 0$) ;
- deux variables de linéarisation $Y_{ij}^+$ et $Y_{ij}^-$ de la fonction valeur absolue, $Y_{ij}^+$ étant la partie positive et $Y_{ij}^-$ étant la partie négative de la fonction valeur absolue, $Y_{ij}^+$ et $Y_{ij}^-$ étant supérieures ou égales à 0 $\left(Y_{ij}^+, Y_{ij}^- \geq 0\right)$ ;
- $U_{ij}$ qui vaut 1 si la partie positive de la valeur absolue est prise en compte, ou 0 si la partie négative de la valeur absolue est prise en compte ($U_{ij} \in \{0,1\}$) ;
- une erreur en tension $Dv_i$ des batteries connectées qui ne doit pas dépasser l'erreur maximale autorisée paramétrée par l'utilisateur (en cas d'erreur de mesure du capteur de tension).

La fonction objectif (Obj.1) peut donc être linéarisée de la manière suivante :

$$\text{Min}\left(\sum_{i \in N} \sum_{j < i, j \in N} \left(Y_{ij}^+ + Y_{ij}^-\right)\right) \qquad (\text{Obj. } 1')$$

Des contraintes de linéarisation de la valeur absolue sont alors introduites :

$$Y_{ij}^+ - Y_{ij}^- = SOC_i - SOC_j \qquad (\text{C. } 11)$$

cette contrainte signifiant que, pour deux batteries i et j, la différence entre les parties positive et négative de la valeur absolue doit être égale à la différence entre leurs états de charge respectifs ;

$$Y_{ij}^+ \leq M * U_{ij} \qquad (\text{C. } 12)$$

$$Y_{ij}^+ \leq M * (1 - U_{ij}) \qquad (\text{C. } 13)$$

où M est une borne supérieure pour la différence d'état de charge entre deux batteries, cette borne pouvant être arbitrairement choisie telle que $M \geq SOC_{max}$. Les contraintes (C.12) et (C.13) permettent d'obliger l'une des parties (positive ou négative) de la valeur absolue à être égale à zéro. Ainsi, en combinant avec la contrainte (C.11), on obtient :

$$Y_{ij}^+ = SOC_i - SOC_j \text{ si } SOC_i \geq SOC_j \text{ ;}$$

et

$$Y_{ij}^- = \text{abs}(SOC_i - SOC_j) \text{ si } SOC_j \geq SOC_i$$

Les contraintes (C.1) à (C.10) décrites précédemment restent valides à l'exception de la contrainte non-linéaire (C.7) qui est linéarisée de la manière suivante :

$$H_i - (L_i + Dv_i) = 0 \qquad (\text{C. } 14)$$

$$-\text{Delta}_v \leq Dv_i \leq \text{Delta}_v \qquad (C.\,15)$$

Ces contraintes signifient que la tension des batteries connectées au bus de distribution doit être identique avec une erreur de $\text{Delta}_v$ paramétrée par l'utilisateur ;

$$U_i - L_i \leq U_{ub} * (1 - X_i) \qquad (C.\,16)$$

$$L_i \leq U_{ub} * X_i \qquad (C.\,17)$$

$$L_i \leq U_i \qquad (C.\,18)$$

Ces contraintes correspondent à la linéarisation du produit des variables $U_i$ et $X_i$, cette linéarisation impliquant l'introduction d'une borne supérieure $U_{ub}$ pour la tension $U_i$. Cette borne peut être arbitrairement choisie telle que $U_{ub} \geq \text{Umax}$.

$$U_{pack} - H_i \leq U_{ub} * (1 - X_i) \qquad (C.\,19)$$

$$H_i \leq U_{ub} * X_i \qquad (C.\,20)$$

$$H_i \leq U_i \qquad (C.\,21)$$

Ces contraintes représentent la linéarisation du produit des variables $U_{pack}$ et $X_i$, cette linéarisation impliquant l'introduction d'une borne supérieure $U_{ub}$ pour la tension $U_{pack}$. Cette borne peut être arbitrairement choisie telle que $U_{ub} \geq \text{Umax}$.

Des paramètres caractéristiques des batteries 120 telles que la tension de circuit ouvert $OCV_i$, la résistance interne $Rs_i$, le courant de charge maximal $IchMax_i$ et le courant de décharge maximal $IdisMax_i$ sont utilisés dans les contraintes (C.3) et (C.4) du problème d'optimisation. Avantageusement, on procède à une étape préalable de caractérisation d'au moins une batterie parmi les N batteries 120 pour obtenir les variations de leurs paramètres caractéristiques en fonction de l'état de charge. Les batteries 120 étant identiques, leurs paramètres caractéristiques sont également sensiblement identiques. Il est donc possible de ne caractériser qu'une seule batterie 120 afin de réduire la complexité d'intégration de l'invention.

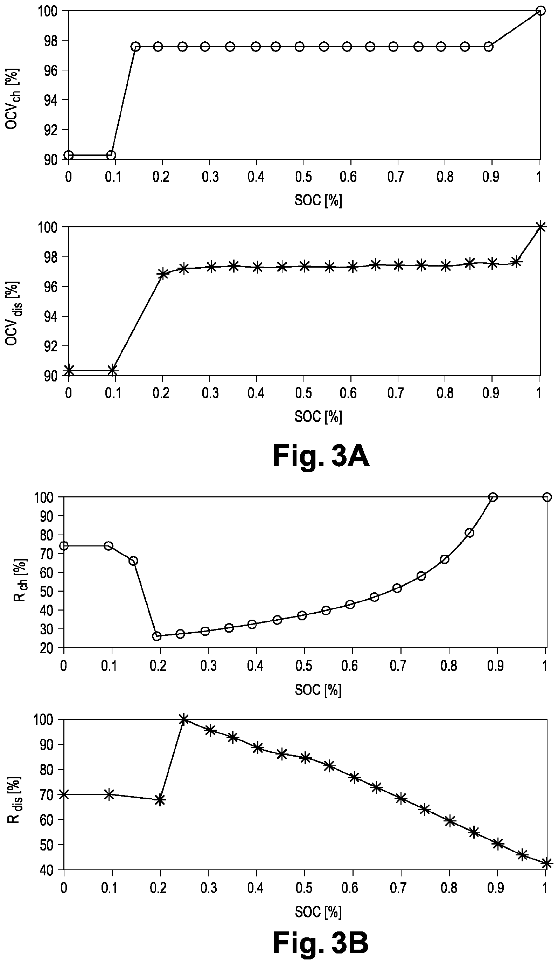

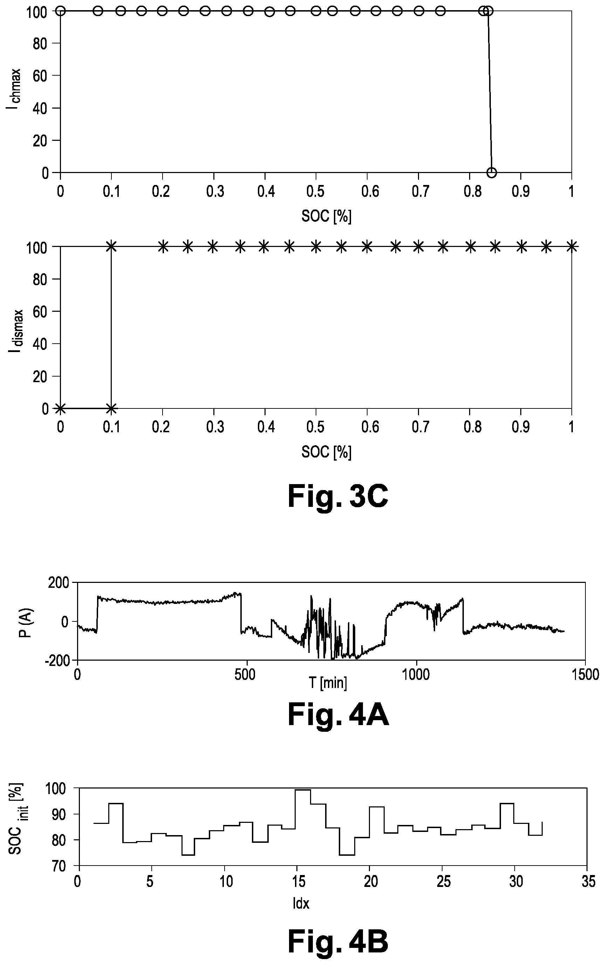

La figure 3A représente, en fonction de l'état de charge de la batterie SOC, les variations des tensions de circuit ouvert OCVch et OCVdis respectivement pour le mode de charge et pour le mode de décharge. La figure 3B représente, en fonction de l'état de charge de la batterie SOC, les variations des résistances internes Rch et Rdis respectivement pour le mode de charge et pour le mode de décharge. La figure 3C représente, en fonction de l'état de charge de la batterie SOC, les variations des courants maximaux Ichmax et Idismax respectivement pour le mode de charge et pour le mode de décharge. Les tensions de circuit ouvert OCVch et OCVdis, les résistances internes Rch et Rdis, et les courants maximaux Ichmax et Idismax sont exprimées en pourcentage de leurs valeurs maximales respectives. L'invention peut également s'appliquer à des batteries ayant un vieillissement différent, ce qui se traduit par des valeurs de résistances internes différentes d'une batterie à l'autre. Ces valeurs de résistances internes peuvent en effet être calculées dynamiquement au moyen des informations de courant et de tension de la période précédente.

La résolution du problème d'optimisation défini précédemment, par exemple au moyen d'un algorithme de recherche arborescente, également appelé « Branch- and-Cut », permet d'obtenir les cartographies des états de conduction des contacteurs 160.

Après l'étape de calcul des cartographies, on procède à une étape (c) de détermination de l'intervalle de courant auquel appartient le courant de fonctionnement $I_{req}$ du système de stockage 100, c'est-à-dire le courant de charge fourni au système 100 dans le mode de charge, ou le courant de décharge fourni par le système 100 dans le mode de décharge.

Ensuite, la cartographie correspondant à l'intervalle de courant déterminé au cours de l'étape (c) est appliquée aux éléments de connexion au cours d'une étape (d). En fonction de l'intervalle dans lequel se trouve le courant de fonctionnement, les contacteurs 160 ne sont pas placés dans les mêmes états de conduction. Grâce à l'invention, le système de stockage 100 répond aux besoins en courant tout en faisant en sorte que les états de charges des batteries 120 convergent vers un même état de charge. Le procédé de gestion assure l'homogénéité des états de charge des batteries 120 au cours du temps.

Les états de charge des batteries 120 variant en fonction des sollicitations appliquées au système de stockage 100, les étapes (a) d'obtention des états de charges et (b) de calcul des cartographies sont avantageusement répétées régulièrement pour maintenir à jour les cartographies par rapport aux variations des états de charge des batteries 120. Une période d'actualisation $T_{update}$ peut donc être définie. Cette période est par exemple paramétrée par l'utilisateur.

L'étape (c) de détermination de l'intervalle de courant peut être répétée à chaque fois que le courant de fonctionnement du système de stockage 100 est modifié. Alternativement, l'étape (c) peut être répétée périodiquement, avec une période appelée « pas temps » ou « pas de contrôle » qui correspond à la fréquence d'échantillonnage du courant de sollicitation, cette période étant inférieure à la période d'actualisation $T_{update}$ des étapes (a) et (b).

La figure 4A montre un exemple de profil de sollicitation en courant P appliqué au système de stockage 100 et à un système de stockage de l'art antérieur 100' dans lequel une mise à niveau des états de charge est effectuée par une source d'énergie externe en cas de nécessité. Pendant cette mise à niveau, le système de stockage 100' est indisponible et ne peut donc pas répondre à des sollicitations, ce qui n'est pas le cas avec le procédé selon l'invention. Le système de stockage de l'art antérieur 100' comporte des batteries 120 identiques à celles du système de stockage 100. Le profil de courant s'étend sur une durée de 24h avec un pas temps d'une minute. La figure 4B montre les états de charges initiaux SOCinit, c'est-à-dire avant la mise en oeuvre du procédé d'équilibrage, des différentes batteries 120 des systèmes de stockage 100, 100'. L'abscisse de la figure 4B correspond à l'indice Idx des batteries 120. En l'occurrence, le nombre N de batteries est égale à 32.

Pour l'application du profil de la figure 4A au système de stockage 100, le procédé d'équilibrage est paramétré avec les valeurs suivantes :

- la période d'actualisation $T_{update}$ est égale à 15 mn ;
- l'erreur maximale en tension $Delta_v$ est égale à 5V ;
- le nombre minimum de batteries 120 connectées Min_On_Battery au bus de distribution 140 est égale à la moitié des batteries, soit 16 sur 32 ;
- le nombre d'intervalles de courant est égal à 5 ;
- les états de charge minimal $SOC_{min}$ et maximal $SOC_{max}$ sont fixés respectivement à 10% et 100%.

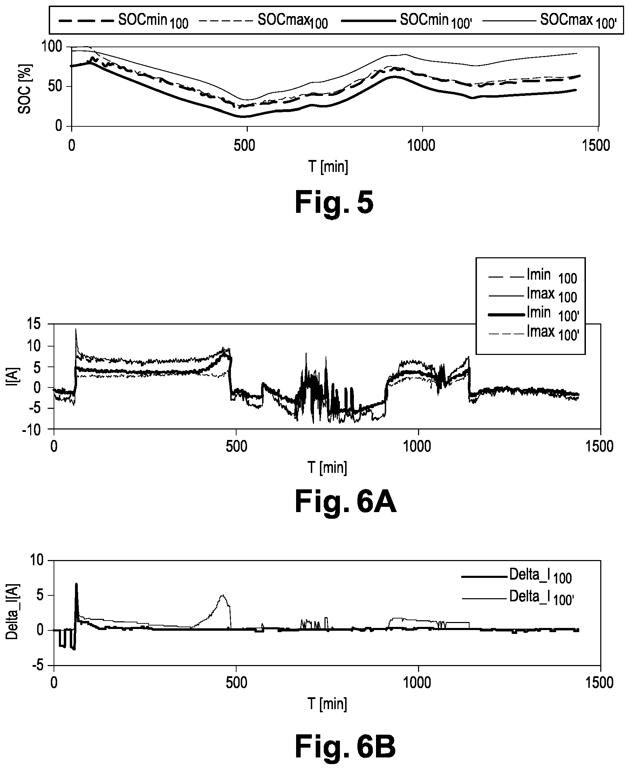

Les résultats de l'application du profil de la figure 4A sont illustrés sur les figures 5, 6A, 6B, 7A et 7B.

La figure 5 montre les variations au cours du temps T des états de charge minimaux $SOCmin_{100}$ et $SOCmin_{100'}$ respectivement pour le système 100 et pour le système 100', et les variations au cours du temps T des états de charge maximaux $SOCmax_{100}$ et $SOCmax_{100'}$ respectivement pour le système 100 et pour le système 100'. Il est à noter que la différence entre l'état de charge minimal et l'état de charge maximal est bien inférieure pour le système de stockage 100 dans lequel le procédé d'équilibrage est mis en oeuvre.

A chaque instant, un état de charge moyen de chaque système 100, 100' peut être obtenu en calculant la moyenne des états de charge de chaque batterie du système 100, 100'. Grâce à l'invention, la différence entre l'état de charge moyen du système 100 et l'état de charge moyen du système 100' est positive au cours du temps, ce qui représente un gain d'autonomie pour le système de stockage 100.

A titre d'exemple, à la fin du profil de sollicitation de la figure 4A, l'état de charge moyen des batteries 120 du système de stockage 100 est d'environ 63,7%, alors que l'état de charge moyen des batteries 120 du système de stockage de l'art antérieur 100' est seulement d'environ 61%, ce qui représente un gain d'autonomie d'environ 2,6% en faveur du système de stockage 100. De plus, sur toute la durée du profil de sollicitation, le gain d'autonomie présente une valeur moyenne d'environ 2,8% et une valeur maximale d'environ 5,8%.

La figure 6A montre les variations au cours du temps T des courants minimaux $Imin_{100}$ et $Imin_{100'}$ fournis (mode de décharge) ou absorbés (mode de charge) respectivement par les batteries du système 100 et par les batteries du système 100', et les variations au cours du temps T des courants maximaux $Imax_{100}$ et $Imax_{100'}$ fournis ou absorbés respectivement par le système 100 et par le système 100'. La figure 6B montre les variations au cours du temps T de la différence $Delta\_I_{100}$ entre le courant $Imax_{100}$ et le courant $Imin_{100}$, et les variations au cours du temps T de la différence $Delta\_I_{100'}$ entre le courant $Imax_{100'}$ et le courant $Imin_{100'}$. Ces figures permettent de constater que les courants fournis ou absorbés par les batteries du système 100 sont quasiment identiques, ce qui implique un vieillissement homogène des batteries. Au contraire, les différences entre les courants fournis ou absorbés par les batteries du système 100' étant plus importantes, le vieillissement des batteries est moins homogène.

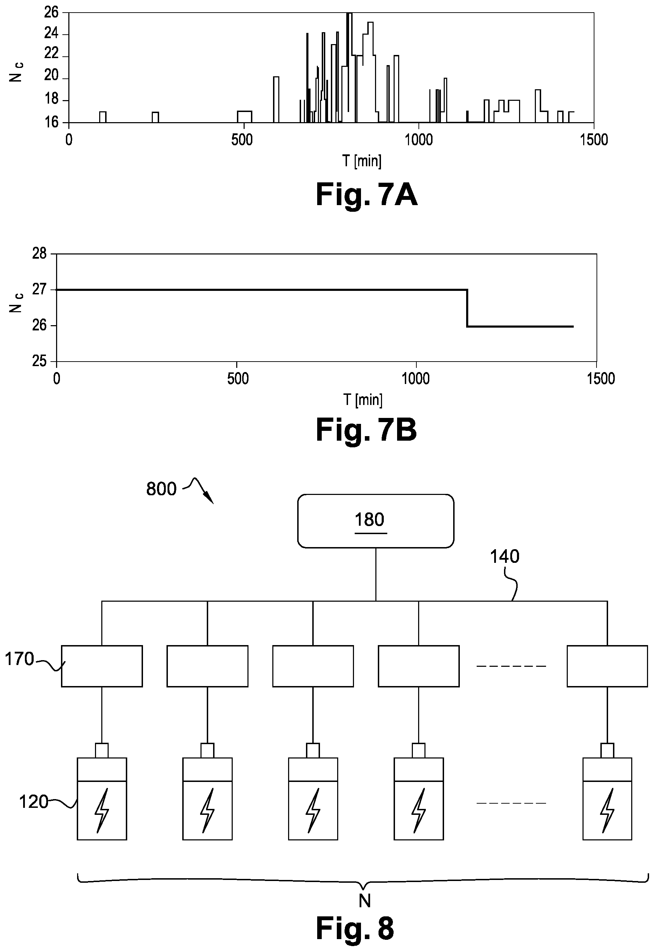

Les figures 7A et 7B montrent les variations au cours du temps T du nombre de batteries 120 connectées $N_c$ respectivement pour le système 100 et pour le système 100'. On constate que le nombre de batteries 120 connectées varie davantage dans le cas système de stockage 100 (entre 16 et 26 batteries connectées) que dans le cas système de stockage 100' (constamment 26 ou 27 batteries connectées). Cela traduit bien l'optimisation qui est faite en modifiant les états de conduction des contacteurs 160.

Les différentes étapes du procédé selon l'invention peuvent être mises en oeuvre par un dispositif de gestion (non représenté) équipant le système de stockage 100 et comportant un processeur. Le procédé selon l'invention est par exemple mis en oeuvre par le biais d'une application. Une application désigne un programme d'ordinateur comprenant des instructions exécutables par le processeur du dispositif de gestion. L'échange d'information entre le système de stockage 100 et l'application se fait par exemple via une communication TCP (Transmission Control Protocol en anglais) à travers une structure de données de type XML.

La figure 8 représente schématiquement un deuxième exemple de contexte de mise en oeuvre du procédé selon l'invention. La figure 8 montre un système de stockage d'énergie électrique 800 comportant toujours N batteries d 120 montés en parallèle. Par contre, chaque batterie 120 est connectée électriquement au bus de distribution 140 par l'intermédiaire d'une résistance variable 170. Les valeurs que peuvent prendre ces résistances 170 forment un intervalle continu.

La fonction objectif du problème d'optimisation reste inchangée. Par contre, le problème d'optimisation subit les modifications suivantes :

- une variable de décision $Rv_i$ correspondant à la valeur de la résistance variable 170 associée à la batterie i est ajoutée ;
- la contrainte (C.3) devient : $U_i = OCV_i \pm (Rs_i + Rv_i) * I_i$ ;
- la variable de décision $X_i$ est supprimée et est remplacé par $X_i = 1$ dans les contraintes (C.5), (C.6) et (C.7) ;
- la contrainte (C.10) est supprimée.

L'intérêt d'utiliser des résistances variables à la place des contacteurs est par exemple d'intégrer cette résistance au sein de la batterie afin de permettre aux états de charge des batteries de converger plus rapidement en connectant plus de batteries. Les résistances variables peuvent également permettre de dissiper de la chaleur.

Naturellement, l'invention n'est pas limitée aux modes de mise en oeuvre décrits en référence aux figures et des variantes pourraient être envisagées sans sortir du cadre de l'invention.

**Revendications**

**1.** Procédé d'équilibrage d'états de charge (SOC) d'une pluralité de dispositifs de stockage d'énergie électrique appartenant à un système de stockage d'énergie électrique (100, 800), les dispositifs de stockage d'énergie (120) étant connectés à un bus de distribution (140) par l'intermédiaire d'éléments de connexion (160, 170), le système de stockage présentant un courant de fonctionnement traversant le bus de distribution, le courant de fonctionnement appartenant à une plage de courant s'étendant entre un courant de charge maximal et un courant de décharge maximal, la plage de courant étant divisée en au moins deux intervalles de courant, un premier intervalle s'étendant entre le courant de charge maximal et un courant nul, et un deuxième intervalle s'étendant entre un courant nul et le courant de décharge maximal, chaque élément de connexion présentant au moins deux états de conduction électrique, le procédé comportant les étapes suivantes :

- (a) obtenir l'état de charge des dispositifs de stockage par des moyens de mesures de l'état de charge ;

le procédé étant **caractérisé par** les étapes:

- (b) calculer, à partir des états de charge obtenus au cours de l'étape (a), une cartographie des états de conduction des éléments de connexion associée à chaque intervalle de courant ;
- (c) déterminer l'intervalle de courant auquel appartient le courant de fonctionnement du système de stockage ;
- (d) appliquer aux éléments de connexion la cartographie associée à l'intervalle de courant déterminé au cours de l'étape (c) ;

les étapes (a) et (b) étant répétées périodiquement pour mettre à jour les cartographies des états de conduction des éléments de connexion.

**2.** Procédé selon la revendication 1 dans lequel l'étape (b) de calcul des cartographies comporte les opérations suivantes :

- construire un problème d'optimisation défini par des variables de décision, des contraintes, et une fonction objectif visant à minimiser l'écart entre les états de charge des dispositifs de stockage (120) ;
- résoudre le problème d'optimisation.

3. Procédé selon la revendication 2 dans lequel les dispositifs de stockage (120) sont connectés en parallèle au bus de distribution par l'intermédiaire de contacteurs (160), le problème d'optimisation étant non-linéaire.

4. Procédé selon la revendication 3 dans lequel le problème d'optimisation est linéarisé.

5. Procédé selon la revendication 2 dans lequel les dispositifs de stockage (120) sont connectés en parallèle au bus de distribution (140) par l'intermédiaire de résistances variables (170), le problème d'optimisation étant non-linéaire.

6. Procédé selon l'une quelconque des revendications 2 à 5 comportant une étape préalable de caractérisation d'au moins un dispositif de stockage (120) pour déterminer, en fonction de l'état de charge du dispositif de stockage, les variations de chacun des paramètres caractéristiques du dispositif de stockage suivants : la tension de circuit ouvert, la résistance interne, le courant de charge maximal et le courant de décharge maximum.

7. Procédé selon l'une quelconque des revendications 1 à 6 dans lequel le premier intervalle de courant et/ou le deuxième intervalle de courant sont subdivisés en un nombre prédéterminé d'intervalles de courant.

8. Procédé selon la revendication 7 dans lequel le nombre prédéterminé d'intervalles de courant est paramétré par un utilisateur.

9. Produit programme d'ordinateur comprenant des instructions pour la mise en oeuvre d'un procédé selon l'une quelconque des revendications 1 à 8, lorsque ces instructions sont exécutées par un processeur.


**Patentansprüche**

1. Ausgleichsverfahren für Ladezustände (SOC) einer Vielzahl von Speichervorrichtungen für elektrische Energie, das zu einem Speichersystem für elektrische Energie (100, 800) gehört, wobei die Energiespeichervorrichtungen (120) mittels Anschlusselementen (160, 170) an einen Verteilerbus (140) angeschlossen sind, wobei das Speichersystem einen Betriebsstrom aufweist, der den Verteilerbus durchquert, wobei der Betriebsstrom zu einem Strombereich gehört, der sich zwischen einem maximalen Laststrom und einem maximalen Entlastungsstrom erstreckt, wobei der Strombereich in wenigstens zwei Stromintervalle unterteilt ist, wobei sich ein erstes Intervall zwischen dem maximalen Laststrom und einem Nullstrom erstreckt und ein zweites Intervall sich zwischen einem Nullstrom und dem maximalen Entlastungsstrom erstreckt, wobei jedes Anschlusselement wenigstens zwei elektrische Leitungszustände aufweist, wobei das Verfahren die folgenden Schritte umfasst:

   - (a) Erhalt des Ladezustandes der Speichervorrichtungen durch Messmittel des Ladezustandes;

   wobei das Verfahren durch die Schritte gekennzeichnet ist:

   - (b) Berechnen einer Kartographie der Leitungszustände der Anschlusselemente, die jedem Stromintervall zugeordnet sind, ausgehend von im Verlauf des Schritts (a) erhaltenen Ladezuständen;
   - (c) Bestimmen des Stromintervalls, zu dem der Betriebsstrom des Speichersystems gehört;
   - (d) Anwenden der dem im Verlauf des Schritts (c) bestimmten Stromintervall zugeordneten Kartographie auf die Anschlusselemente; wobei die Schritte (a) und (b) periodisch wiederholt sind, um die Kartographien der Leitungszustände der Anschlusselemente zu aktualisieren.

2. Verfahren gemäß Anspruch 1, bei dem der Schritt (b) der Berechnung der Kartographien die folgenden Operationen umfasst:

   - Aufbauen eines Optimierungsproblems, das durch Entscheidungsvariable, Vorgaben und eine Zielfunktion definiert ist, die auf die Minimierung der Abweichung zwischen den Ladeschritten der Speichervorrichtungen (120) abzielt;
   - Lösung des Optimierungsproblems.

3. Verfahren gemäß Anspruch 2, bei dem die Speichervorrichtungen (120) parallel zum Verteilerbus mittels Kontaktgeber (160) angeschlossen sind, wobei das Optimierungsproblem nicht linear ist.

4. Verfahren gemäß Anspruch 3, bei dem das Optimierungsproblem linearisiert ist.

**5.** Verfahren gemäß Anspruch 2, bei dem die Speichervorrichtungen (120) parallel zum Verteilerbus (140) mittels variabler Widerstände (170) angeschlossen sind, wobei das Optimierungsproblem nicht linear ist.

**6.** Verfahren gemäß irgendeinem der Ansprüche 2 bis 5, umfassend einen vorherigen Charakterisierungsschritt wenigstens einer Speichervorrichtung (120) zum Bestimmen der Abweichungen jedes charakteristischen Parameters der folgenden Speichervorrichtungen in Abhängigkeit vom Ladezustand der Speichervorrichtung: die Spannung des offenen Schaltkreises, der interne Widerstand, der maximale Laststrom und der maximale Entlastungsstrom.

**7.** Verfahren gemäß irgendeinem der Ansprüche 1 bis 6, bei dem das erste Stromintervall und/oder das zweite Stromintervall in eine vorbestimmte Anzahl von Stromintervallen unterteilt sind.

**8.** Verfahren gemäß Anspruch 7, bei dem die vorbestimmte Anzahl von Stromintervallen durch einen Nutzer parametriert ist.

**9.** Computerprogramm-Produkt, umfassend Anweisungen für die Umsetzung eines Verfahrens gemäß irgendeinem der Ansprüche 1 bis 8, wenn diese Anweisungen durch einen Prozessor ausgeführt sind.

**Claims**

**1.** Method for balancing states of charge (SOC) of a plurality of electrical energy storage devices belonging to a system for storing electrical energy (100, 800), the electrical energy storage devices (120) being connected to a distribution bus (140) by the intermediary of connection elements (160, 170), with the storage system having an operating current passing through the distribution bus, the operating current belonging to a current range extending between a maximum charge current and a maximum discharge current, with the current range being divided into at least two current intervals, a first interval extending between the maximum charge current and a zero current, and a second interval extending between a zero current and the maximum discharge current, with each connection element having at least two electrical conduction states, the method comprising the following steps:

- (a) obtaining the state of charge of the storage devices by means for measuring the state of charge;

with the method **characterised by** the steps of:

- (b) calculating, from the states of charge obtained during the step (a), a mapping of the conduction states of the connection elements associated with each current interval;
- (c) determining the current interval to which the operating current of the storage system belongs;
- (d) applying to the connection elements the mapping associated with the current interval determined during the step (c);

with the steps (a) and (b) being repeated periodically in order to update the cartographies of the conduction states of the connection elements.

**2.** Method according to claim 1 wherein the step (b) of calculating the mappings comprises the following operations:

- constructing an optimisation problem defined by decision variables, constraints, and an objective function aiming to minimise the difference between the states of charge of the storage devices (120);
- resolving the optimisation problem.

**3.** Method according to claim 2 wherein the storage devices (120) are connected in parallel to the distribution bus by the intermediary of contactors (160), as the optimisation problem is non-linear.

**4.** Method according to claim 3 wherein the optimisation problem is linearised.

**5.** Method according to claim 2 wherein the storage devices (120) are connected in parallel to the distribution bus (140) by the intermediary of variable resistors (170), as the optimisation problem is non-linear.

**6.** Method according to any of claims 2 to 5 comprising a prior step of characterising at least one energy storage device (120) in order to determine, according to the state of charge of the storage device, the variations in each one of the following characteristic parameters of the storage device: the open circuit voltage, the internal resistance, the maximum charge current and the maximum discharge current.

7. Method according to any of claims 1 to 6 wherein the first current interval and/or the second current interval are subdivided into a predetermined number of current intervals.

8. Method according to claim 7 wherein the predetermined number of current intervals is configured by a user.

9. Computer program product comprising instructions for the implementing of a method according to any of claims 1 to 8, when these instructions are executed by a processor.

100

180

140

160

120

N

**Fig. 1**

$T_{update}$?

(a)

(b)

$I_{req}$

(c)

(d)

**Fig. 2**

Fig. 3A

Fig. 3B

Fig. 3C

Fig. 4A

Fig. 4B

**Fig. 5**

**Fig. 6A**

**Fig. 6B**

**Fig. 7A**

**Fig. 7B**

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102015002072 A1
- EP 2939864 A1